# EUROPEAN PATENT APPLICATION

(11) **EP 2 404 970 A1**
(43) Date of publication of application: **11.01.2012**
(21) Application number: 10748562.5
(22) Date of filing: 19.01.2010
(51) Int. Cl.: C09B 47/20, B41J 2/01, B41M 5/00, C09D 11/00, C09D 11/02

(54) **INFRARED ABSORBING MATERIAL, METHOD FOR SYNTHESIZING SAME, COLORING COMPOSITION, INK, TONER, PRINTED MATERIAL, IMAGE RECORDING METHOD AND IMAGE INFORMATION DETECTING METHOD**

(30) Priority: 05.03.2009 JP 2009051673; 27.11.2009 JP 2009270827
(71) Applicant: FUJIFILM Corporation, Tokyo 106-8620 (JP)
(72) Inventor: KOBAYASHI, Katsumi, Odawara-shi Kanagawa 250-0001 (JP); KIMURA, Keizo, Odawara-shi Kanagawa 250-0001 (JP); NII, Kazumi, Minami-Ashigara-shi Kanagawa 250-0123 (JP); TAGUCHI, Toshiki, Ashigarakami-gun Kanagawa 258-8577 (JP); KITAGAWA, Takashi, Odawara-shi Kanagawa 250-0001 (JP)
(74) Representative: HOFFMANN EITLE
(86) International application number: PCT/JP2010/050543
(87) International publication number: WO 2010/100964

(57) **Abstract**

[PROBLEMS]

To provide an infrared absorbing material which is readable with an infrared ray, and an ink, a toner, a printed matter, an image recording method and an image information detecting method that use the infrared absorbing material.

[MEANS FOR SOLVING THE PROBLEMS]

An infrared absorbing material, that is represented by the following Formulae (1a) or (1b) and comprises an acidic ion in a content of 0.1% by mass or less with respect to a total mass of the infrared absorbing material: 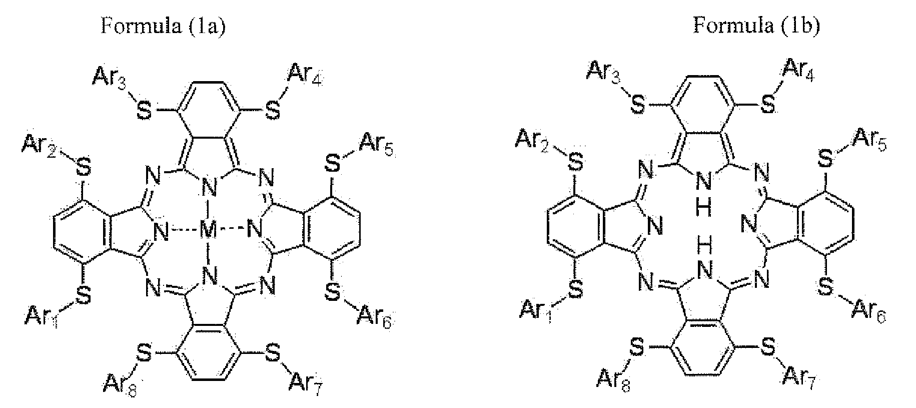 wherein, in Formulae (1a), M represents a metal atom or a substituted metal atom and, in Formulae (1a) and (1b), each of Ar₁, Ar₂, Ar₃, Ar₄, Ar₅, Ar₆, Ar₇ and Ar₈ independently represents a substituted or unsubstituted aryl group.

## Description

### [Technical Field]

The present invention relates to an infrared absorbing material, a method for synthesizing the same, a coloring composition including the infrared absorbing material, an ink, a toner, a printed material, an image recording method using the composition, and an image information detecting method.

### [Background Art]

In recent years, as evidenced by the enactment of the Personal Information Protection Law, measures aimed at information security have been widely carried out by society as a whole.
Further, "product liability" in the form, for example, of food forgery or product recall has also come under close scrutiny, and the development of means for the prevention of forgery is a challenge that urgently needs to be addressed for the sake of society as a whole.
In view of such circumstances, various security techniques have been designed, and among these, since infrared absorbing materials are extremely effective for invisible information recording, coloring compositions including an infrared absorbing material are widely used in order to secure authentic information against counterfeiters, and it is thought that demand therefore will continue to increase hereafter (see, for example, Japanese Patent Application Publication (JP-B) No. 46-25288, Japanese Patent Application Laid-Open (JP-A) No. 58-45999, and Japanese National Phase Publication No. 2005-537319).
In the utilization of such an infrared absorbing material for the use application of marking for security, various methods are now under consideration as information or image recording methods.
For example, the following methods have been proposed: a method including adding an infrared absorbing material to a printing ink; in an inkjet system, a method including adding an infrared absorbing material to an ink; in a dye sublimation thermal transfer system, a method including adding an infrared absorbing material into an ink sheet; in an electrographic system, a method including adding an infrared absorbing material to a toner particle itself or to a toner fixing material; and, in a heat sensitive or pressure sensitive recording system, a method including adding an infrared absorbing material into a microcapsule.

These infrared absorbing materials are required to have high solubility or dispersibility in a solvent depending on the use application; to be capable of high density recording; to have good hue and be invisible to the naked eye in the intended use application; to have excellent resistance to light, heat, air, water, or chemicals; when used together with an image receiving material, to have good fixing ability to the image receiving material and to be less likely to desorption or bleeding; when included in a coloring composition of, for example, an ink, a toner, a microcapsule, or the like, to have excellent storage stability over time, to be non-toxic, to have high purity, and to be available at low cost.

However, it is not easy to find an infrared absorbing material which satisfies these requirements at a high level. Various dyes or pigments have already been proposed (see, for example, JP-A Nos. 3-79683 and 2000-309736), and are actually being used.

### SUMMARY OF INVENTION

### [Technical Problem]

However, an infrared absorbing material and a coloring composition including the same that satisfy all the requirements have not been obtained yet.
In general, infrared absorbing materials are slightly colored whether they are dyes or pigments, and therefore, it is not easy to make them invisible. Further, since infrared absorbing materials are problematic in terms of heat ray absorption due to their narrow absorption band gap, many infrared absorbing materials have significant stability problems, and therefore, it is also a significant challenge to provide the infrared absorbing materials with stability.

In addition to the above problems, it is clearly understood that there is a problem in that coloring compositions including an infrared absorbing material may damage equipment.
Conventional coloring compositions including an infrared absorbing material generally contain an acidic anion as a result of the method of synthesizing the infrared absorbing material or the method of preparing the coloring composition.
However, when contacting equipment, acidic anions (a halogen ion, a sulfate ion, a sulfite ion, an organic sulfonate ion, an organic sulfinate ion, a phosphate ion, an organic phosphate ion, or the like) have high corrosiveness, and by a chemical attack on the equipment, acidic anions cause various problems such as generation of rust, corrosion, or rot due to water absorption. Especially in fine marking systems, fine printing, inkjet printing, toner printing, and the like, this problem is significant.

Accordingly, the technical problem of the invention is to provide an infrared absorbing material which has detectable absorption in the infrared region but high invisibility and has excellent durability as a marking system, a coloring composition including the same, a method for synthesizing an infrared absorbing material which has detectable absorption in the infrared region but high invisibility, an ink, a toner, a printed material, an image recording method using the composition, and an image information detecting method.

### [Solution to Problem]

The inventors have found that the objects of the invention can be achieved by the following means.
<1> An infrared absorbing material, that is represented by the following Formulae (1a) or (1b) and includes an acidic ion in a content of 0.1% by mass or less with respect to a total mass of the infrared absorbing material.

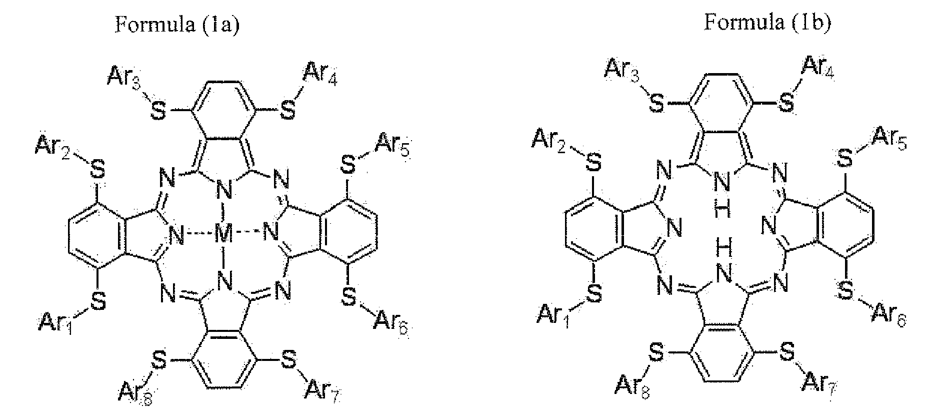

In Formulae (1a), M represents a metal atom or a substituted metal atom and, in Formulae (1a) and (1b), each of Ar₁, Ar₂, Ar₃, Ar₄, Ar₅, Ar₆, Ar₇ and Ar₈ independently represents a substituted or unsubstituted aryl group.
<2> A colored composition including at least one of the infrared absorbing material according to the item <1>.
<3>. A method of synthesizing an infrared absorbing material represented by the following Formulae (1a) or (1b), wherein a compound represented by the following Formula (2) is used as a raw material.

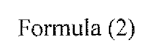

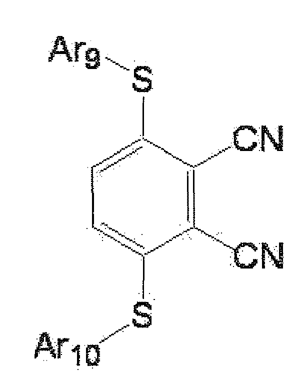

In Formula (2), each of Ar₉ and Ar₁₀ independently represents a substituted or un substituted aryl group.

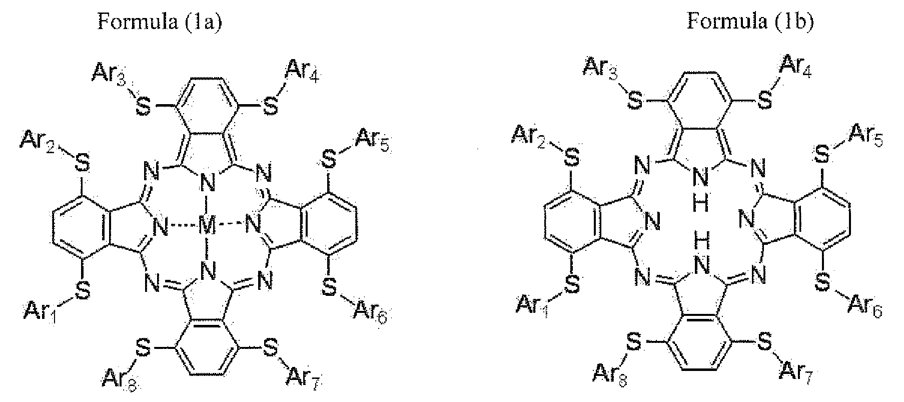

In Formulae (1a), M represents a metal atom or a substituted metal atom and, in Formulae (1a) and (1b), each of Ar₁, Ar₂, Ar₃, Ar₄, Ar₅, Ar₆, Ar₇ and Ar₈ independently represents a substituted or unsubstituted aryl group.
<4> The method of synthesizing an infrared absorbing material according to the item <3>, the method including a reaction process including t-BuOM³ and a lithium halide in organic solvent, wherein M³ represents an alkali metal.
<5> The method of synthesizing an infrared absorbing material according to item <4>, wherein the reaction process including t-BuOM³ and a lithium halide further includes a hydroquinone.
<6> An infrared absorbing material synthesized by the method of synthesizing an infrared absorbing material according to any one of the items <3> to <5>.
<7> A colored composition including at least one of the infrared absorbing material according to the item <6>.
<8> The colored composition according to the item <2> or the item <7>, wherein M in Formula (1a) is a copper atom.
<9> The colored composition according to the item <2> or the item <7>, further including a colorant and a binder.
<10> An ink comprising the colored composition according to any one of the items <2> and <7> to <9>.
<11> A toner including the colored composition according to any one of the items <2> and <7> to <9>.
<12> A printed matter that is printed using the colored composition according to any one of the items <2> and <7> to <9>.
<13> An image recording method including using the colored composition according to any one of the items <2> and <7> to <9>.
<14> An image detecting method for detecting image information of an image which is recorded by the image recording method according to the item <13>, the image detecting method including using an infrared detector.

### [Advantageous Effects of Invention]

According to the present invention, a coloring composition which has detectable absorption in the infrared region but high invisibility and has excellent durability as a marking system may be provided. Further, according to the present invention, a method for synthesizing an infrared absorbing material which has detectable absorption in the infrared region but high invisibility, an ink, a toner, a printed material, an image recording method using the composition, and an image information detecting method may be provided.

Since the coloring composition of the present invention has high transparency, does not have sub-absorption in the visible region, and has near infrared absorption, an image or information including the coloring composition of the present invention has excellent invisibility and can be detected only when an infrared ray detector is used, and therefore has high security properties. Accordingly, the image or information including the coloring composition of the present invention can be particularly preferably utilized for the use of checking means such as prevention of falsification, prevention of reconstruction, or discrimination of documents, cards, or the like.
Further, when a mark is applied to a general product or the like by using the coloring composition of the present invention, the mark can not be recognized visually and can be detected only by using infrared rays, the coloring composition can be utilized for the authenticity determination and proof whether the product is original or not.
Moreover, since the coloring composition of the present invention has excellent light fastness, as well as excellent heat resistance and wet heat resistance, the printed materials or marks to be prepared can be utilized stably under various usage environments or storage environments.

### DESCRIPTION OF EMBODIMENTS

Hereinafter, the present invention will be described in more detail. Note that, in the present specification, the expression "from A to B" which shows a numeric value range is used to indicate that the lower limit value represented by A and the upper limit value represented by B are both included in the range.

### (Infrared Absorbing Material Represented by Formula (1a) or (1b))

The infrared absorbing material (infrared absorbent) represented by Formula (1a) or (1b) of the present invention is described.

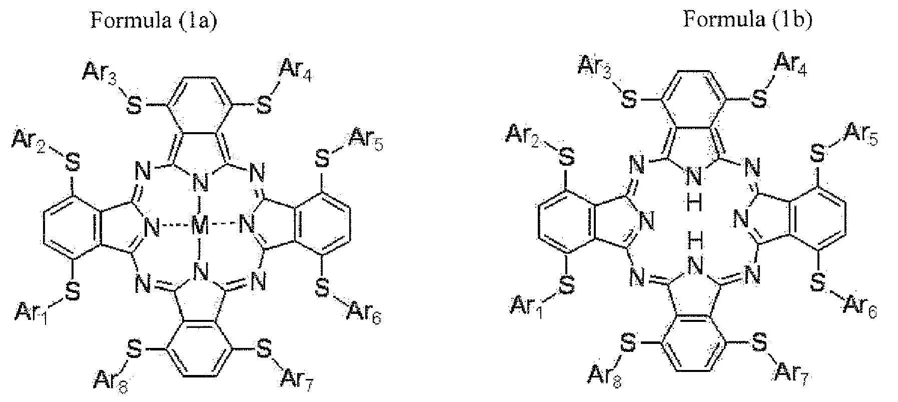

(In the formulae, M represents a metal atom or a substituted metal; and Ar₁, Ar₂, Ar₃, Ar₄, Ar₅, Ar₆, Ar₇, and Ar₈ each independently represent a substituted or unsubstituted aryl group.)

Preferable examples of the metal atom or the metal of the substituted metal represented by M include copper, zinc, nickel, iron, cobalt, silicon, palladium, aluminum, magnesium, vanadium, and gallium.
The metal atom represented by M is preferably copper.
The substituted metal represented by M is preferably a metal oxide or a metal halide, and preferable examples thereof include a vanadyl group (V=O).

The infrared absorbing material represented by Formula (1a) or (1b) in the present invention is preferably a compound represented by Formula (1a), more preferably a compound of Formula (1a) in which M represents Cu, Zn, or a vanadyl group (V=O), and even more preferably a compound of Formula (1a) in which M represents Cu.

The infrared absorbing material represented by Formula (1a) or (1b) of the present invention may have tautomers according to the structure and the environment where the material is placed. In this specification, one of the representative forms is described, but the tautomers that are different from the compound described in this specification are also included in the compound which may be used in the present invention.

The aryl group in this specification encompasses an aromatic group formed from carbon atoms only and a heterocyclic group containing a heteroatom. Further, the aromatic group may be condensed with an aliphatic ring, another aromatic ring, or a hetero ring. The aromatic group preferably has from 6 to 40 carbon atoms, more preferably from 6 to 30 carbon atoms, and even more preferably from 6 to 20 carbon atoms. Preferable examples of the heterocyclic group include pyridine, pyrazine, triazine, pyrrole, furan, thiophene, imidazole, thiazole, and oxazole. Above all, the aryl group is preferably phenyl or naphthyl, and particularly preferably phenyl.

The aryl groups represented by Ar₁ to Ar₈ in this specification are each independently, preferably, an aryl group having from 6 to 20 carbon atoms, and more preferably an aryl group having from 6 to 12 carbon atoms (for example, a phenyl group or a naphthyl group). These aryl groups may be substituted by the substituent described below.

Examples of the substituents for the substituted aryl group in the present invention include substituents described below.
· a halogen atom (for example, a chlorine atom, a bromine atom, or an iodine atom);
· an alkyl group [which may be a substituted or unsubstituted, and linear, branched, or cyclic alkyl group; an alkyl group (preferably, an alkyl group having 1 to 30 carbon atoms; for example, methyl, ethyl, n-propyl, isopropyl, t-butyl, n-octyl, eicosyl, 2-chloroethyl, 2-cyanoethyl, and 2-ethylhexyl), a cycloalkyl group (preferably, a substituted or unsubstituted cycloalkyl group having 3 to 30 carbon atoms; for example, cyclohexyl, cyclopentyl, and 4-n-dodecylcyclohexyl), a bicycloalkyl group (preferably, a substituted or unsubstituted bicycloalkyl group having 5 to 30 carbon atoms, namely, a monovalent group obtained by removing one hydrogen atom from bicycloalkane having 5 to 30 carbon atoms; for example, bicyclo[1,2,2]heptan-2-yl and bicyclo[2,2,2]octan-3-yl), and further a tricyclo structure having many cyclic structures, and the like. An alkyl group included in a substituent described below (for example, an alkyl group in an alkylthio group) also represents the alkyl group of this concept];

an alkynyl group [which may be a substituted or unsubstituted, and linear, branched, or cyclic alkenyl group; an alkenyl group (preferably, a substituted or unsubstituted alkenyl group having 2 to 30 carbon atoms; for example, vinyl, allyl, prenyl, gelanyl, and oleyl), a cycloalkenyl group (preferably, a substituted or unsubstituted cycloalkenyl group having 3 to 30 carbon atoms, namely, a monovalent group obtained by removing one hydrogen atom from cycloalkene having 3 to 30 carbon atoms; for example, 2-cyclopenten-1-yl and 2-cyclohexen-1-yl), a bicycloalkenyl group (a substituted or unsubstituted bicycloalkenyl group, and preferably, a substituted or unsubstituted bicycloalkenyl group having 5 to 30 carbon atoms, namely, a monovalent group obtained by removing one hydrogen atom from bicycloalkene having one double bond; for example, bicyclo[2,2,1]hepto-2-en-1-yl and bicyclo[2,2,2]octo-2-en-4-yl) are described];

an alkynyl group (preferably, a substituted or unsubstituted alkynyl group having 2 to 30 carbon atoms; for example, ethynyl, propargyl, and a trimethylsilylethynyl group), an aryl group (preferably, a substituted or unsubstituted aryl group having 6 to 30 carbon atoms; for example, phenyl, p-tolyl, naphthyl, m-chlorophenyl, and o-hexadecanoytaminophcnyl);
· a heterocyclic group (preferably, a monovalent group obtained by removing one hydrogen atom from 5- or 6-membered, substituted or unsubstituted, aromatic or non-aromatic heterocyclic compound, and more preferably a 5- or 6-membered aromatic heterocyclic group having 3 to 30 carbon atoms; for example, 2-furyl, 2-thienyl, 2-pyrimidinyl, and 2-benzothiazolyl);

· an cyano group;
· a hydroxyl group;
· a nitro group;
· a carboxyl group;
· an alkoxy group (preferably, a substituted or unsubstituted alkoxy group having 1 to 30 carbon atoms; for example, methoxy, ethoxy, isopropoxy, t-butoxy, n-octyloxy, and 2-methoxyethoxy);
· an aryloxy group (preferably, a substituted or unsubstituted aryloxy group having 6 to 30 carbon atoms; for example, phenoxy, 2-methylphenoxy, 4-t-butylphenoxy, 3-nitrophenoxy, and 2-tetradecanoylaminophenoxy);
· a silyloxy group (preferably, a silyloxy group having 3 to 20 carbon atoms; for example, trimethylsilyloxy and t-butyldimethytsilyloxy);
· a heterocyclic oxy group (preferably, a substituted or unsubstituted heterocyclic oxy group having 2 to 30 carbon atoms; for example, 1-phenyltetrazole-5-oxy and 2-tetrahydropyranyloxy);

· an acyloxy group (preferably, a formyloxy group, a substituted or unsubstituted alkylcarbonyloxy group having 2 to 30 carbon atoms, or a substituted or unsubstituted arylcarbonyloxy group having 6 to 30 carbon atoms; for examples, formyloxy, acetyloxy, pivaloyloxy, stearoyloxy, benzoyloxy, and p-methoxyphenylcarbonyloxy);
· a carbamoyloxy group (preferably, a substituted or unsubstituted carbamoyloxy group having 1 to 30 carbon atoms; for example, N,N-dimethylcarbamoyloxy, N,N-diethylcarbamoyloxy, morpholinocarbonyloxy, N,N-di-n-octylaminocarbonyloxy, and N-n-octylcarbamoyloxy);

· an alkoxycarbonyloxy group (preferably, a substituted or unsubstituted alkoxycarbonyloxy group having 2 to 30 carbon atoms; for example, methoxycarbonyloxy, ethoxycarbonyloxy, t-butoxycarbonyloxy, and n-octylcarbonyloxy);
· an aryloxycarbonyloxy group (preferably, a substituted or unsubstituted aryloxycarbonyloxy group having 7 to 30 carbon atoms; for example, phenoxycarbonyloxy, p-methoxyphenoxycarbonyloxy, and p-n-hexadecyloxyphenoxycarbonyloxy);
· an amino group (preferably, an amino group, a substituted or unsubstituted alkylamino group having 1 to 30 carbon atoms, or a substituted or unsubstituted anilino group having 6 to 30 carbon atoms; for example, amino, methylamino, dimethylamino, anilino, N-methyl-anilino, and diphenylamino),

· an acylamino group (preferably, a formylamino group, a substituted or unsubstituted alkylcarbonylamino group having 1 to 30 carbon atoms, or a substituted or unsubstituted arylcarbonylamino group having 6 to 30 carbon atoms; for example, formylamino, acetylamino, pivaloylamino, lauroylamino, benzoylamino, and 3,4,5-tri-n-octyloxyphenylcarbonylamino);
· an aminocarbonylamino group (preferably, a substituted or unsubstituted aminocarbonylamino group having 1 to 30 carbon atoms; for example, carbamoylamino, N,N-dimethylaminocarbonylamino, N,N-diethylaminocarbonylamino, and morpholinocarbonylamino);
· an alkoxycarbonylamino group (preferably, a substituted or unsubstituted alkoxycarbonylamino group having 2 to 30 carbon atoms; for example, methoxycarbonylamino, ethoxycarbonylamino, t-butoxycarbonylamino, n-octadecyloxycarbonylamino, and N-methyl-methoxycarbonylamino);
· an aryloxycarbonylamino group (preferably, a substituted or unsubstituted aryloxycarbonylamino group having 7 to 30 carbon atoms; for example, phenoxycarbonylamino, p-chlorophenoxycarbonylamino, and m-n-octyloxyphenoxycarbonylamino);

· a sulfamoylamino group (preferably, a substituted or unsubstituted sulfamoylamino group having 0 to 30 carbon atoms; for example, sulfamoylamino, N,N-dimethylaminosulfonylamino, and N-n-octylaminosulfonylamino);
· an alkylsulfonylamino group and an arylsulfonylamino group (preferably, a substituted or unsubstituted alkylsulfonylamino group having 1 to 30 carbon atoms and a substituted or unsubstituted arylsulfonylamino group having 6 to 30 carbon atoms; for example, methylsulfonylamino, butylsulfonylamino, phenylsulfonylamino, 2,3,5-trichlorophenylsulfonylamino, and p-methylphenylsulfonylamino);
· a mercapto group;
· an alkylthio group (preferably, a substituted or unsubstituted alkylthio group having 1 to 30 carbon atoms; for example, methylthio, ethylthio, and n-hexadecylthio);
· an arylthio group (preferably, a substituted or unsubstituted arylthio group having 6 to 30 carbon atoms; for example, phenylthio, p-chlorophenylthio, and m-methoxyphenylthio);

· a heterocyclic thio group (preferably, a substituted or unsubstituted heterocyclic thio group having 2 to 30 carbon atoms; for example, 2-benzothiazolylthio and 1-phenyltetrazol-5-ylthio);
· a sulfamoyl group (preferably, a substituted or unsubstituted sulfamoyl group having 0 to 30 carbon atoms; for example, N-ethylsulfamoyl, N-(3-dodecyloxypropyl)sulfamoyl, N,N-dimethylsulfamoyl, N-acetylsulfamoyl, N-benzoylsulfamoyl, and N-(N'-phenylcarbamoyl)sulfamoyl);
· a sulfo group;

· an alkylsulfinyl group and an arylsulfinyl group (preferably, a substituted or unsubstituted alkylsulfinyl group having 1 to 30 carbon atoms and a substituted or unsubstituted arylsulfinyl group having 6 to 30 carbon atoms; for example, methylsulfinyl, ethylsulfinyl, phenylsulfinyl, and p-methylphenylsulfinyl);
· an alkylsulfonyl group and an arylsulfonyl group (preferably, a substituted or unsubstituted alkylsulfonyl group having 1 to 30 carbon atoms and a substituted or unsubstituted arylsulfonyl group having 6 to 30 carbon atoms; for example, methylsulfonyl, ethylsulfonyl, phenylsulfonyl, and p-methylphenylsulfonyl);
· an acyl group (preferably, a formyl group, a substituted or unsubstituted alkylcarbonyl group having 2 to 30 carbon atoms, a substituted or unsubstituted arylcarbonyl group having 7 to 30 carbon atoms, or a substituted or unsubstituted heterocyclic carbonyl group having 4 to 30 carbon atoms in which the heterocycle bonds to the carbonyl group through a carbon atom; for example, acetyl, pivaloyl, 2-chloroacetyl, stearoyl, benzoyl, p-n-octyloxyphenylcarbonyl, 2-pyridylcarbonyl, and 2-furylcarbonyl);
· an aryloxycarbonyl group (preferably, a substituted or unsubstituted aryloxycarbonyl group having 7 to 30 carbon atoms; for example, phenoxycarbonyl, o-chlorophenoxycarbonyl, m-nitrophenoxycarbonyl, and p-t-butylphenoxycarbonyl);

· an alkoxycarbonyl group (preferably, a substituted or unsubstituted alkoxycarbonyl group having 2 to 30 carbon atoms; for example, methoxycarbonyl, ethoxycarbonyl, t-butoxycarbonyl, and n-octadecyloxycarbonyl);
· a carbamoyl group (preferably, a substituted or unsubstituted carbamoyl group having 1 to 30 carbon atoms; for example, carbamoyl, N-methylcarbamoyl, N,N-dimethylcarbamoyl, N,N-di-n-octylcarbamoyl, and N-(methylsulfonyl)carbamoyl);
· an arylazo group and a heterocyclic azo group (preferably, a substituted or unsubstituted arylazo group having 6 to 30 carbon atoms and a substituted or unsubstituted heterocyclic azo group having 3 to 30 carbon atoms; for example, phenylazo, p-chlorophenylazo, and 5-ethylthio-1,3,4-thiadiazol-2-ylazo);
· an imido group (for example, N-succinimide and N-phthalimide);
· a phosphino group (preferably, a substituted or unsubstituted phosphino group having 2 to 30 carbon atoms; for example, dimethylphosphino, diphenylphosphino, and methylphenoxyphosphino);

· a phosphinyl group (preferably, a substituted or unsubstituted phosphinyl group having 2 to 30 carbon atoms; for example, phosphinyl, dioctyloxyphosphinyl, and diethoxyphosphinyl);
· a phosphinyloxy group (preferably, a substituted or unsubstituted phosphinyloxy group having 2 to 30 carbon atoms; for example, diphenoxyphosphinyloxy and dioctyloxyphosphinyloxy);
· a phosphinylamino group (preferably, a substituted or unsubstituted phosphinylamino group having 2 to 30 carbon atoms; for example, dimethoxyphosphinylamino and dimethylaminophosphinylamino);
· a silyl group (preferably, a substituted or unsubstituted silyl group having 3 to 30 carbon atoms; for example, trimethylsilyl, t-butyldimethylsilyl, and phenyldimethylsilyl).

Among the functional groups described above, the group which has a hydrogen atom may be further substituted by the above group after removing the hydrogen atom. Examples of such functional group include an alkylcarbonylaminosulfonyl group, an arylcarbonylaminosulfonyl group, an alkylsulfonylaminocarbonyl group, and an arylsulfonylaminocarbonyl group. Specific examples thereof include methylsulfonylaminocarbonyl, p-methylphenylsulfonylaminocarbonyl, acetylaminosulfonyl, and a benzoylaminosulfonyl group.

The aryl group represented by Ar1 to Ar8 in the present invention is preferably a substituted or unsubstituted phenyl group or naphthyl group. A preferable substituent for the aryl group is an alkyl group having 1 to 30 carbon atoms such as methyl, ethyl, n-propyl, isopropyl, t-butyl, n-octyl, eicosyl, 2-chloroethyl, 2-cyanoethyl, 2-ethylhexyl, or the like.

Specific examples of the infrared absorbing material represented by Formula (1a) or (1b) of the present invention are shown below, however it should be construed that the present invention is not limited to these specific examples.

| Compound No. | M | Ar₁ to Ar₈ | Note |
|---|---|---|---|
| 1 | Cu | 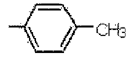 | Compound of the present invention |
| 2 | Cu | 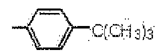 | Compound of the present invention |
| 3 | Cu | 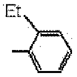 | Compound of the present invention |
| 4 | Cu | 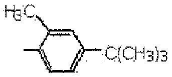 | Compound of the present invention |
| 5 | Cu | 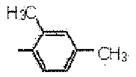 | Compound of the present invention |
| 6 | Cu | 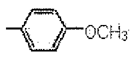 | Compound of the present invention |
| 7 | Cu | 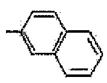 | Compound of the present invention |
| 8 | Cu | 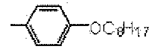 | Compound of the present invention |
| 9 | V=O | 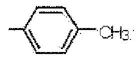 | Compound of the present invention |
| 10 | V=O | 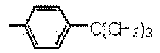 | Compound of the present invention |
| 11 | Zn | 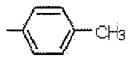 | Compound of the present invention |
| 12 | Zn | 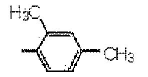 | Compound of the present invention |

### (Method for Synthesizing Infrared Absorbing Material Represented by Formula (1a) or (1b))

The infrared absorbing material represented by Formula (1a) or (1b) in the present invention is synthesized by using a compound represented by the following Formula (2) as the raw material. Preferably, the method includes a process of synthesizing the infrared absorbing material in which the compound represented by the following Formula (2) is allowed to react in an organic solvent in the presence of lithium halide.

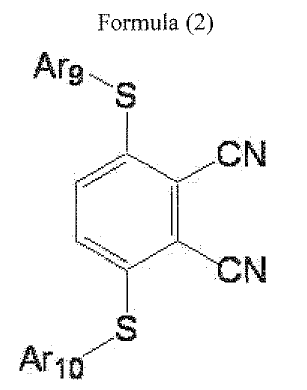

(In the formula, Ar₉ and Ar₁₀ each independently represent a substituted or unsubstituted aryl group.)

The synthesis method using the compound represented by Formula (2) above as a raw material is represented by the formula described below.
Since the synthesis route is not a route via halogen-containing phthalocyanine, a chlorine ion does not contaminate essentially. On the other hand, in a conventional synthesis method through the reaction of multi-halogen containing phthalocyanine with an arylthio compound, which is disclosed, for example, in JP-A No. 60-209583, the eliminated chlorine atoms may be contaminated, and thus the concentration of acidic anions may increase extremely. The contaminated chlorine atoms may be removed in some extent in the succeeding purification, however, to remove them thoroughly is not realistic also from the viewpoints of production costs and the like.

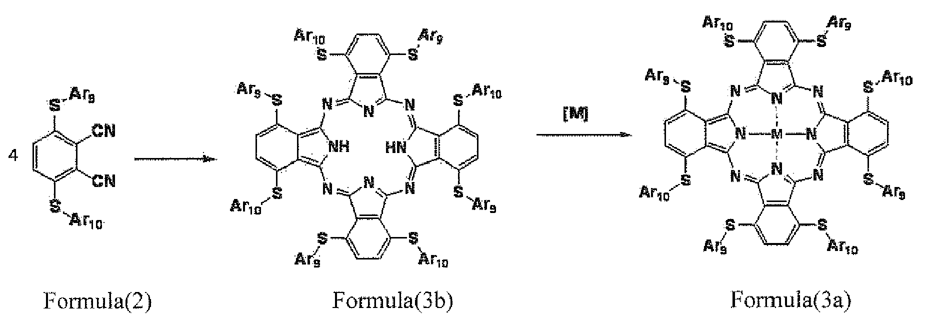

In the formulae, Ar₉, Ar₁₀, and M each independently have the same definition as Ar₁ to Ar₆ described above.

The synthesis process of synthesizing the compound of Formula (3b) from the compound of Formula (2) can be conducted in high yield by allowing to react, preferably, in an organic solvent in the presence of lithium halide. More preferably, the synthesis process is conducted in the presence of alcoholate (for example, sodium alcoholate, potassium alcoholate, or the like) and hydroquinone.
For example, in a case in which t-butanol alcoholate (t-BuOM³, M³: an alkaline metal (for example, Na, K, or the like)) is used as alcoholate, the amount of t-BuOM³ is preferably from 0.1 times molar amount to 20 times molar amount, more preferably from 1 time molar amount to 8 times molar amount, and even more preferably from 2 times molar amount to 4 times molar amount, with respect to the compound of Formula (2), which is the raw material. Further, the amount of lithium halide is preferably from 0.1 times molar amount to 50 times molar amount, more preferably from 1 time molar amount to 15 times molar amount, and even more preferably from 3 times molar amount to 10 times molar amount, with respect to the compound of Formula (2), which is the raw material.

It is preferable to use an alcohol having from 1 to 20 carbon atoms as a solvent used for the reaction, it is more preferable to use an alcohol having from 1 to 10 carbon atoms, it is even more preferable to use methanol, ethanol, 1-propanol, 2-propanol, 1-butanol, 2-butanol, t-butanol, 1-pentanol, 2-pentanol, i-pentanol, t-pentanol, 1-octanol, or 2-octanol, and it is particularly preferable to use 1-butanol. The amount of the alcohol to be used as the solvent is preferably from 0.1 times to 50 times the amount of the phthalonitrile compound represented by Formula (2), which is the raw material, more preferably from 1 time to 15 times the amount of the phthalonitrile compound, and even more preferably from 2 times to 6 times the amount of the phthalonitrile compound. Further, it is also preferable to further mix an amide solvent (for example, N,N-dimethylformamide, N,N-dimethylacetamide, or 1 -methyl-2-pyrrolidone), a sulfone solvent (for example, sulfolane), a sulfoxide solvent (for example, dimethylsulfoxide), an ether solvent (for example, dioxane or cyclopentyl methyl ether), a ketone solvent (for example, acetone or cyclohexanone), a hydrocarbon solvent (for example, toluene or xylene), a halogen solvent (for example, tetrachloroethane or chlorobenzene), or a pyridine solvent (for example, pyridine, γ-picoline, or 2,6-lutidine) with these solvents.

Further, it is preferable to undergo reaction in the presence of hydroquinone. The amount of hydroquinone is preferably from 0.05 times molar amount to 5 times molar amount, more preferably from 0.1 times molar amount to 3 times molar amount, and even more preferably from 0.2 times molar amount to 2 times molar amount, with respect to the compound of Formula (2), which is the raw material. It is preferable that the addition of hydroquinone is conducted at the time of the addition of the compound represented by Formula (2), which is the raw material, lithium halide, or t-BuOM³, it is also preferable that the addition is conducted after the completion of elevating the temperature, and it is also preferable that the addition is conducted at any time between the initiation of the reaction and immediately before the completion of the reaction.

The reaction temperature is from -30°C to 250°C, preferably from 0°C to 200°C, more preferably from 20°C to 150°C, and even more preferably from 50°C to 120°C; and the reaction time is preferably in a range of from 5 minutes to 30 hours.

The synthesis process of synthesizing the compound of Formula (3a) from the compound of Formula (3b) can be conducted through a conventionally known reaction of introducing a metal or a substituted metal into a phthalocyanine nucleus. For example, the synthesis process can be conducted under the conditions disclosed in JP-A No. 60-209583.

### (Acidic Anion Content)

The infrared absorbing material represented by Formula (1a) or (1b) in the present invention is **characterized in that** the acidic anion content is as low as 0.1 % by mass or less. Preferably, the acidic anion content is 0.08% by mass or less, and more preferably 0.07% by mass or less.

The types of acidic anion to be incorporated may be different depending on the synthesis method, specifically, depending on the material to be used as the raw material, the solvent, the reaction vessel, or the like, but the acidic anion is a halogen ion (a chlorine ion, a bromine ion, an iodine ion, or the like), a sulfate ion, a sulfite ion, an organic sulfonate ion, an organic sulfinate ion, a phosphate ion, an organic phosphate ion, or the like.
These acetic anions have high corrosiveness with respect to metals, and by a chemical attack upon the equipments, the acidic anions cause problems such as generation of rust, corrosion, or the like. Further, other problems such as progress of rot due to increase in hygroscopic property may also occur. When the acidic anion content is 0.1% by mass or less, these problems may be settled, which is preferable in the case of using a coloring composition, especially in connection with equipments for semiconductors.
Further, when a coloring composition including the infrared absorbing material of the present invention, which has a low acidic anion content, is used, storage stability of the ink may be improved, and also light fastness or wet heat resistance of the printed material may be improved. Moreover, when the coloring composition including the infrared absorbing material of the present invention, which has a low acidic anion content, is used in an inkjet ink, image bleeding may be suppressed and image quality may be enhanced.

### (Coloring Composition)

The coloring composition of the present invention contains at least one infrared absorbing material represented by Formula (1a) or (1b) as a colorant.
The coloring composition of the present invention may further contain, other than the infrared absorbing material, a colorant having absorption in the visible region (which may be referred to as a "colored colorant" in some cases in the following description, in order to distinguish the colorant from an infrared absorbing material), a binder, or a volatile solvent. More preferably, the coloring composition of the present invention may contain an antioxidant, a surfactant, an inorganic filler, or the like.

The infrared absorbing material represented by Formula (1a) or (1b) may be incorporated in the coloring composition in the form of a solid such as powder or a granule, or in the form of a fine particle dispersion, or may be incorporated in the coloring composition by being dissolved in water or in an organic solvent. Further, depending on the use of the coloring composition, the coloring composition may be used in the form of a microcapsule.
The coloring composition of the present invention can be used for various applications including an inkjet ink, an ink for general printing (offset printing, gravure printing, or the like), a toner, and an industrial UV curable ink (for use in semiconductors or the like).
The kind and the content of the colored colorant, binder, volatile solvent, antioxidant, surfactant, inorganic filler, and the like are preferably selected as appropriate, depending on the use of the coloring composition.

### (Printing Ink and Toner)

The printing ink and toner containing the coloring composition of the present invention are described.
The printing inks containing the coloring composition of the present invention can be applied for printing and for printers. For example, printing inks such as gravure inks, flexo inks, offset inks, screen inks, or inks for letterpress printing, and inks for various printers and the like such as printers for heat sensitive transfer, inkjet printers, impact printers, or laser printers are included. Preferable examples of the inks include printing inks such as gravure inks, gravure inks, flexo inks, offset inks, screen inks, inks for letterpress printing or the like, and inkjet printer, impact printer, and laser printer offset inks.

The content of the infrared absorbing material in the ink is preferably from 0.01% by mass to 5.0% by mass, and more preferably from 0.1% by mass to 3.0% by mass, based on the total mass of the ink.
The content of the infrared absorbing material in the toner is preferably from 0.01% by mass to 5.0% by mass, and more preferably from 0.1% by mass to 3.0% by mass, based on the total mass of the toner.

The toners containing the coloring composition of the present invention can be applied to any toners. A toner is used in a laser printer or copying machine and includes micro-sized particles formed through adhering dye or pigment particles to plastic particles having charging property. A printed material is formed by transferring a toner to paper utilizing the static electricity that the toner has, and by fixing the toner using heat. The toner containing the coloring composition of the present invention includes particles in which at least one infrared absorbent represented by Formula (1a) or (1b) is fused or adhered to the above plastic particles.

The ink or toner containing the coloring composition of the present invention may contain a pigment or dye (colored colorant) having absorption in the visible region, together with the infrared absorbing material represented by Formula (1a) or (1b). Examples of the pigment include chrome yellow, cadmium yellow, yellow iron oxide, titanium yellow, naphthol yellow, Hanza yellow, pigment yellow, benzidine yellow, permanent yellow, quinoline yellow, anthrapyrimidine yellow, permanent orange, molybdenum orange, vulcan fast orange, benzidine orange, indanthrene brilliant orange, iron oxide, amber, permanent brown, rose iron oxide red, antimony powder, permanent red, fire red, brilliant carmine, light fast red toner, permanent carmine, pyrazolone red, Bordeaux, helio-Bordeaux, rohdamine lake, DuPont oil red, thioindigo red, thioindigo marron, watching red strontium, cobalt purple, fast violet, dioxane violet, methyl violet lake, methylene blue, aniline blue, cobalt blue, cerulean blue, chalco oil blue, nonmetal phthalocyanine blue, phthalocyanine blue, ultramarine blue, indanthrene blue, indigo, chrome green, cobalt green, pigment green B, green gold, phthalocyanine green, malachite green oxalate, and polychloro-bromo copper phthalocyanine.

It is preferable that the ink or toner containing the coloring composition of the present invention contains a binder. Examples of the binder include polystyrenes; copolymers formed of styrene with (meth)acrylate, acrylonitrile, or maleate; poly(meth)acrylic esters: polyesters; polyamides; epoxy resins; phenol resins; hydrocarbon resins; and petroleum resins, and these binders can be used alone or in a combination with other binder or additives.
Preferable binders are polyester resins and epoxy resins obtained by using bisphenol A and epichlorohydrin.

### (Image Recording Method)

The image recording method using the coloring composition of the present invention can be used in, for example, an image recording method of recording images (including information such as character data) by printing (gravure printing, intaglio printing, offset printing, or the like) using an printing ink containing an infrared absorbing material; an image recording method of recording images by an inkjet system using an inkjet ink containing an infrared absorbing material; an image recording method of recording images by a sublimation thermal transfer system using an ink sheet containing an infrared absorbing material; an image recording method of recording images by an electrographic system using a toner particle or toner fixing material containing an infrared absorbing material; an image recording method of recording images by a heat sensitive or pressure sensitive recording system using a microcapsule containing an infrared absorbing material; and the like.

Particularly, in the utilization of the image recording method using a printing ink or a toner for the use of marking for security, the obtained image has excellent invisibility and can be detected only when an infrared ray detector is used, and therefore has high security properties. Accordingly, the image recording method can be particularly preferably utilized for the use of checking means such as prevention of falsification, prevention of reconstruction, and discrimination of documents, cards, or the like.

### (Image Information Detecting Method)

The image information recorded by means of the above image recording method can be detected by using an infrared ray detector.
As a light source for the image information detecting method of the present invention, any light source may be used as far as the light source has radiation energy in the infrared region of from 650 nm to 1500 nm, however, a laser, a light emitting diode, or the like can be suitably used. By using a band path filter or the like, noise generated at the light source or at the detector can be reduced.
Image information detection can be carried out through irradiating or scanning a printed material with infrared rays and detecting the reflected or transmitted infrared rays by using a detector.

A system which can be used for the method of proofing originality of a product or substrate in the present invention can include irradiating a printed material containing the infrared absorbing material represented by Formula (1a) or (1b) with infrared rays by using the above light source, detecting the reflected infrared rays or measuring the reflection factor of the infrared light, and reading higher information by pattern analysis thereof. Further, in order to make it more difficult to forge, the image information detecting method of the present invention can be used in combination with other method to heighten the accuracy of judgment of originality. Examples of the other method which may be used in combination include an optical variable device, such as more or hologram, and embossing.

Hereinafter, the present invention will be described in more detail.

### (1) Gravure/ Intaglio Pattern Printing Ink

A suitable gravure ink for intaglio pattern printing contains an infrared absorbing material represented by Formula (1a) or (1b), a binder, and a volatile solvent. Preferably, the ink further contains a colorant. More preferably, the ink may contain an antioxidant, a surfactant, an inorganic filler, or the like.

The selection of resins for rotogravure inks depends on the solvent, the substrate to be printed, and the end use of the printed material. Detailed examples of the resin suitable for the production of inks, including a gravure type ink, are described in "Synthetic Resins", written by Werner Husen, The American Ink Maker, June 1952, page 63 and "Synthetic Resins for Inks", written by John P. Petrone, The American Ink Maker, vol. 49, March to October 1971. Useful resins include rosin and modified rosins, for example, calcium and zinc resinates, and variants of these. Other examples of suitable resins include:
(a) petroleum resins or various modified products of cyclopentadiene resins, examples of which are found in this specification, and in U.S. Patent No. 3,084,147 and British Patent No. 1,369,370, which are incorporated herein by reference; and
(b) a modified resin, which has an ability for inducing a stable viscosity and excellent printing property, and has a softening point of 145°C, as described in Japanese Patent No. 47994/72 (this modified resin is obtained by collecting a fraction of distillate having a boiling point of from 140°C to 220°C from a cracking oil obtained by thermal cracking of petroleum, then polymerizing the fraction by using a Friedel-Crafts catalyst to obtain a resin having a softening point of 160°C, then reacting this resin with an unsaturated carboxylic acid or an anhydride thereof in an amount of from 0.01 mol to 0.4 mol per 100 g of the resin, and subsequently esterifying the resulting resin obtained by using a monovalent alcohol in an amount of from 0.2 mol to 2.0 mol per 1 mol of the above unsaturated carboxylic acid or anhydride thereof).

The volatile solvent component may be an aliphatic or alicyclic hydrocarbon, for example, hexane, heptane, or cyclohexane, or may be an aromatic hydrocarbon, for example, xylene, toluene (for example, tolusol 25), high flash naphtha, benzene, or chlorobenzene. Other examples of the solvent include C₁₋₄-alkanols, acetates of C₁₋₅-alkanols, glycol ethers having a BP of from 115°C to 180°C, C₁₋₅-aliphatic ketones, and cyclohexanone. The resin should be soluble in the solvent, and readily separated therefrom. Since the drying of gravure inks results from evaporation of the solvent, the ink vehicle is essentially a resin and a solvent. Various types of vehicles can be used according to the particular combination of resin and solvent.

Preferable antioxidant is a phenolic or amine antioxidant, and preferable antioxidant composition is a mixture of a phenoli antioxidant and an amine antioxidant. A preferable antioxidant composition includes from about 10% by mass to about 90% by mass, more preferably from about 25% by mass to about 75% by mass, of a phenolic antioxidant, and includes from about 90% by mass to about 10% by mass, and more preferably from about 75% by mass to about 25% by mass, of an amine antioxidant.

Examples of suitable amine antioxidants include octylated diphenylamine, isopropoxy diphenylamine, an aldol-α-naphthylamine condensation product of diphenylamine and acetone, N,N'-diphenyl-p-phenylenediamine, phenyl-β-naphthylamine, polymerized 1,2-dihydro-2,2,4-trimethylquinoline, N,N'-di(2-octyl)-p-phenylenediamine, other aromatic amines, diphenylamines, and mixtures thereof. Examples of suitable phenolic antioxidants include 4,4'-isopropylidene-diphenol, styrenated phenol, hindered phenol, 4,4'-thiobis(6-t-butyl-o-cresol), p-butylphenol, p-(i-propyl)phenol, 2,4-dimethyl-6-octylphenol, 2,6-di-t-butyl-4-methylphenol, 2,6-di-t-butyl-4-ethylphenol, 2,6-di-t-butyl-4-n-butylphenol, 2,2'-methylenebis(4-methyl-6-t-butylphenol), 2,2'-methylenebis(4-ethyl-6-t-butylphenol), 2,4-dimethyl-6-t-butylphenol, 4-hydroxymethyl-2,6-di-t-butylphenol, n-octadecyl-β-(3,5-di-t-butyl-4-hydroxyphenyl) propionate, and mixtures thereof. Preferable phenolic antioxidants are phenols having sterically complicated structure.

The inks for intaglio pattern printing containing an antioxidant or an antioxidant composition can be produced by a conventional method. For example, the ink vehicle can be produced by dissolving 100 parts by mass of a resin and 1 part by mass of an antioxidant or antioxidant composition in 200 parts by mass or less of a petroleum solvent having a high boiling point. A preferable solvent, for example, a mixture including 70% by mass of toluene, 4% by mass of xylene, and 26% by mass of lactol spirits, has a Kauri-butanol value of about 105 (in contrast to aliphatic solvents having a Kauri-butanol value of from 35 to 45).

The infrared absorbent that is preferably included in the ink composition in an amount of from 0.01% by mass to 5.0% by mass, more preferably in an amount of from 0.1 % by mass to 3.0% by mass, based on the total mass of the ink, provides a detectable transparent infrared ray absorbing ink which can be seen, after application to a substrate, in the substrate only when the substrate is viewed by an infrared ray sensitive detector under appropriate irradiation.

In a case in which the ink further contains a colored colorant, it is possible to visually detect the printed pattern, however the printed substrate (material to be printed) is distinguishable from a substrate printed with an ink that does not contain an infrared absorbent, in a similar manner.

An infrared absorbent or a colored colorant (for example, phthalocyanine blue, benzidine yellow, channel black, Carmine 6B, or titanium white) is added to an ink vehicle, preferably in the form of a dispersion liquid, and then the resulting mixture is placed in a ball mill and ground until a uniform dispersion liquid of the pigment is obtained in the ink vehicle. The obtained ink concentrate can be subsequently diluted with additional solvent to have an appropriate concentration for use in printing operation.

A typical gravure ink composition for intaglio pattern printing contains from about 0.005% by mass to about 0.5% by mass of an antioxidant composition, from about 10% by mass to about 50% by mass of a resin, and from about 0.01% by mass to about 5.0% by mass, preferably from 0.1 % by mass to 3.0% by mass, of an infrared absorbent, based on the total mass of the ink, and/or from about 50 parts to about 100 parts of a dye colorant per 100 parts of the resin; and the residue essentially consists of a mixture of hydrocarbon solvents such as toluene, xylene, and lactol spirits. The viscosity of ink at the time of use is preferably 5 poises or less, and more preferably from 0.5 poises to 1.0 poises. The amount of the antioxidant composition to be used is preferably from 0.005% by mass to 0.5% by mass, and more preferably in a range of from 0.025% by mass to 0.5% by mass, based on the total mass of the ink.

In order to improve printing suitability, flow behavior, and pigment wetting, other additives can also be added in an amount of from 1% by mass to 15% by mass (more preferably from 1 % by mass to 10% by mass) with respect to the resin. Wax, for example, an ester wax, an amide wax, or a hydrocarbon wax, can be added in an amount of from 0.1 % by mass to 5% by mass. Other additives capable of adaptation, for example, ethyl cellulose or ethyl hydroxy cellulose may be used to improve ink film adhesion, scuff resistance, gloss, or the like. Printing inks are preferably used without using a plasticizer, however a plasticizer can be added for the purpose of achieving special effects.

Suitable substrates are those conventionally used in intaglio pattern printing, for example, paper, cellophane, or a metal film such as an aluminum film.

### (2) Toner

The toner containing the coloring composition of the present invention contains an infrared absorbent represented by Formula (1a) or (1b) and a binder. Preferably, the toner according to the present invention further contains a colored colorant. Further, the toner according to the present invention may contain an antioxidant, a surfactant, an inorganic filler, or the like.
The toner may be a conventional toner in which an infrared absorbent represented by Formula (1a) or (1b) is fused or dispersed in the binder that forms a matrix of the toner particles, or may be a toner in which an infrared absorbent represented by Formula (1a) or (1b) is included in a chemically produced toner.

### <Conventional Type Toner>

The flash fixing toner contains a binder, a colored colorant, and an infrared absorbent represented by Formula (1a) or (1b). The infrared absorbent represented by Formula (1a) or (1b) is preferably present in an amount of from 0.01% by mass to 5.0% by mass (more preferably from 0.1% by mass to 3.0% by mass) based on the total mass of the toner. The infrared absorbent represented by Formula (1a) or (1b) is preferably contained by being fused or dispersed in the binder that forms the matrix of the toner particles.

Preferable examples of the binder which may be used in the flash fixing toner include polystyrenes; copolymers formed of styrene with (meth)acrylate, acrylonitrile, or maleate; poly(meth)acrylic esters: polyesters; polyamides; epoxy resins; phenol resins; hydrocarbon resins; and petroleum resins, and these binders may be used alone or in a combination with other binder or additives.
Preferable binders are polyester resins and epoxy resins obtained by using bisphenol A and epichlorohydrin.

Preferable examples of the colored colorant which may be used in the flash fixing toner include one or more types of pigments or colorants, for example, chrome yellow, cadmium yellow, yellow iron oxide, titanium yellow, naphthol yellow, Hanza yellow, pigment yellow, benzidine yellow, permanent yellow, quinoline yellow, anthrapyrimidine yellow, permanent orange, molybdenum orange, vulcan fast orange, benzidine orange, indanthrene brilliant orange, iron oxide, amber, permanent brown, rose iron oxide red, antimony powder, permanent red, fire red, brilliant carmine, light fast red toner, permanent carmine, pyrazolone red, Bordeaux, helio-Bordeaux, rohdamine lake, DuPont oil red, thioindigo red, thioindigo marron, watching red strontium, cobalt purple, fast violet, dioxane violet, methyl violet lake, methylene blue, aniline blue, cobalt blue, cerulean blue, chalco oil blue, nonmetal phthalocyanine blue, phthalocyanine blue, ultramarine blue, indanthrene blue, indigo, chrome green, cobalt green, pigment green B, green gold, phthalocyanine green, malachite green oxalate, and polychloro-bromo copper phthalocyanine. The amount of the colored colorant may be varied widely, but it is preferable that the colored colorant is included in an amount of from 3 parts by mass to 5 parts by mass based on 100 parts by mass of the above binder.

The flash fixing toner can contain further components, for example, a wax, a charge control agent, and/or a flow-enhancer.
Preferable waxes are polyolefin type waxes and natural waxes, for example, carnauba wax, montan wax, a natural paraffin, polyethylene, polypropylene, polybutylene, an ethylene-propylene copolymer, an ethylene-butene copolymer, an ethylene-pentene copolymer, or an ethylene-3-methyl-1-butene copolymer, and copolymers of olefins with other monomers, for example, vinyl esters, haloolefins, (meth)acrylic esters, (meth)acrylic acid, or derivatives thereof. The mass average molecular weight of the waxy component is preferably from 1,000 daltons to 45,000 daltons.

Preferable examples of the charge control agent include nigrosine, monoazo dyes, zinc, hexadecyl succinate, alkyl esters or alkyl amides of naphthoic acid, nitrohumic acid, N,N-tetramethyl diamine benzophenone, N,N-tetramcthyl benzidine, triazines, and metal complexes of salicylic acid. In the case of a colorant other than black, it is preferable that the charge control agent is substantially colorless.

Preferable examples of the flow-enhancer include fine particles of an inorganic substance, for example, colloidal silica, hydrophobic silica, hydrophobic titania, hydrophobic zirconia, or talk, and fine particles of an organic substance, for example, polystyrene beads or (meth)acrylic acid beads.

In a case in which an infrared absorbent is fused or dispersed in the binder, it is preferable that a coupling agent and the infrared absorbent (and any other components described above) are compounded and kneaded together. The resulting mixture is cooled and pulverized, and thereafter, the particles are classified.

### <Chemically Produced Toner>

The coloring composition of the present invention may be incorporated in a chemically produced toner. By mixing one or more types of polymers having different molecular weight, the molecular weight distribution and the melt rheology properties of the toner can be controlled. Examples of suitable polymers include styrene-acrylate copolymers, styrene-butadiene copolymers, polyesters, and hydrocarbon resins.

In a case in which a coloring composition is incorporated in the toner to form a colored image on the printed substrate, a charge control agent or a wax may be added to aid release from the fusion roller. Suitable colored colorants include pigments (including magnet pigments, provided that these pigments do not interfere with the absorption of infrared radiation by the infrared absorbent) and dyes. Preferable charge control agents include metal complexes, for example, complexes of Zn, Al, Fe, or Cr, and polymer materials, for example, complexes of a phenolic polymer, and the like. Preferable waxes include hydrocarbon waxes, for example, paraffins, polyethylene or polypropylene waxes, waxes derived from carbon monoxide and hydrogen, for example, Fischer-Tropsch wax, natural product waxes, for example, carnauba wax, and synthetic waxes, for example, ester or amide waxes.

The toner may also include a surfactant, and an inorganic or organic filler, for example, silica, titania, alumina, or polymer particles, to control the fluidity, charging performance, or transfer properties.

### (3) UV Curable Ink

The UV curable ink containing the coloring composition of the present invention can be used for the purpose of applying marks including the infrared absorbing material (infrared absorbent) represented by Formula (1a) or (1b) to products or substrates.

Preferable UV curable ink compositions contain an alkoxylated or polyalkoxylated acrylate monomer, a photoinitiator, an infrared absorbent, and a colored colorant, as described in U.S. Patent No.6,114,406.
Preferable UV curable ink compositions contain a polyfunctional alkoxylated and/or polyalkoxylated acrylate monomer in an amount of from 80% by mass to 95% by mass with respect to the total composition, an infrared absorbent, and, as necessary, a colored colorant.

The amounts of the acrylate monomer, photoinitiator, infrared absorbent, and colored colorant may vary depending on the particular equipment and the intended use. However, the amount of the photoinitiator is preferably from 1% by mass to 15% by mass of the total composition.

The polyfunctional alkoxylated or polyalkoxylated acrylate monomer material can contain one or more di- or triacrylates; or alkoxylated or polyalkoxylated arylate monomers having higher functionality may be used alone or may be used together with one or more di-and/or trifunctional materials. The number of alkyleneoxy groups is preferably from 1 to 20 per one molecule of the monomer, and such groups are each preferably C₂₋₄-alkyleneoxy, and particularly preferably ethyleneoxy (EO) or propyleneoxy (PO).

Suitable polyfunctional alkoxylated or polyalkoxylated acrylates include alkoxylated, preferably ethoxylated or propoxylated, adducts of neopentyl glycol diacrylate, butanediol diacrylate, trimethylpropane triacrylate, or glyceryl triacrylate.

The ink may contain a monofunctional alkoxylated or polyalkoxylated acrylate monomer, for example, an alkoxylated, specifically ethoxylated or propoxylated, adduct of one or more of tetrahydrofurfuryl acrylate, cyclohexyl acrylate, alkyl acrylate, nonyl-phenol acrylate, or polyethylene- or polypropylene-glycol acrylate, in an amount of 10% by mass or less.

The ink may also contain a non-alkoxylated monofunctional or polyfunctional radiation curable monomer, for example, octyl acrylate, decyl acrylate, N-vinylpyrrolidone, ethyl diglycol acrylate, isobornyl acrylate, ethyl-hexyl acrylate, lauryl acrylate, butanediol monoacrylate, β-carboxyethyl acrylate, i-butyl acrylate, polypropylene glycol monomethacrylate, 2-hydroxyethyl methacrylate, hexanediol di(meth)acrylate, tetraethylene glycol diacrylate, tripropylene glycol diacrylate, butanediol diacrylate, polyethylene glycol diacrylate, or triethylene glycol dimethacrylate, in an amount of 5% by mass or less.

Preferable examples of the photoinitiator, which is commercially available and can be utilized, include xanthones, thioxanthones, benzophenones, quinones, and phosphine oxides. Examples of a co-initiator, which can be incorporated together with a primary photoinitiator, include amines and aminobenzoates. In a case in which the ink contains a primary photoinitiator and a co-initiator, the total amount is preferably within the preferable range described above. The aminobenzoate and acrylated amine co-initiators are preferably used together with the xanthone and/or thioxanthone primary photoinitiators.

The term "radiation curable" means that the composition is curable by the application of UV radiation. In a case in which such a composition is a substantially colorless curable varnish or base, or the coloring composition further contains a colored colorant (namely, a material which is visible or provides a related optical property such as fluorescence), the composition may be an ink. In a case in which a colored colorant is incorporated, it is preferable that the ink contains the colorant in an amount of from 1% by mass to 10% by mass with respect to the ink.

Preferable colored colorants can be classified into two types, namely, (a) dyes which are substantially soluble in the ink composition and (b) pigments which are dispersed in the ink composition in the form of fine particles by using an appropriate dispersant. Examples of a typical pigment include Pigment Red 57 : 1, Pigment Red 52 : 2, Pigment Red 48 : 2, Pigment Blue 15 : 3, Pigment Green 7, Pigment Yellow 83, Pigment Yellow 13, and Pigment White 6.

The ink may contain other minor components, for example a surfactant, a leveling additive, a photoinitiator, a stabilizer, a wetting agent, or a pigment stabilizer. The latter may be especially in the form of a high molecular weight block copolymer of, for example, a polyester, polyurethane, or polyacrylate type, and is generally incorporated at a level of from 2.5% by mass to 100% by mass of the pigment. Specific examples include DISPERBYK 16] or 162 (all trade names, manufactured by BYK Chemie) and SOLSPERSE HYPERDISPERSANT (trade name, manufactured by Avecia). Preferable examples of the photoinitiator and stabilizer include those disclosed in EP 0465039A. Preferable surfactants include non-ionic surfactants, for example, FLUORAD FC430 (trade name, manufactured by 3M Corp.). In a case in which such a surfactant is incorporated, the surfactant is preferably included in an amount of from 0.1% by mass to 10% by mass of the total composition.

Preferably, inks or varnishes do not substantially contain an organic solvent, or are totally free of organic solvent. The amount of the organic solvent is preferably less than 10%, more preferably less than 5%, even more preferably less than 1%, and most preferably less than 0.1%, of the mass of the total composition.

The application of the coloring composition of the present invention is not limited to the use in the above UV curable ink, and can also be used in any other soluble or dispersible UV curable inks.

### (4) Lithographic Printing Ink

The ink composition of the present invention for lithographic printing contains the coloring composition of the present invention, a binder, and a volatile solvent. Preferably, the ink composition further contains a colored colorant. More preferably, the ink composition may contain an antioxidant, a surfactant, an inorganic filler, or the like.

The binder is preferably derived from a crosslinked resin produced by grafting polyepoxide onto usable carboxyl groups on, for example, a phenolic or maleic acid-modified rosin ester resin, and subsequently the binder is solubilized with an aliphatic alcohol having at least 12 carbon atoms.

The phenolic or maleic acid-modified rosin ester resin preferably has a number average molecular weight of from about 1,500 to about 3,000. The polyepoxide is preferably a diepoxide, more preferably an aromatic or alicyclic diepoxide, and particularly preferably bisphenol A diepoxide. The molecular weight of the polyepoxide is preferably 560 daltons or less, more preferably from 100 daltons to 500 daltones, and particularly preferably from 300 daltons to 500 daltons.

The phenolic or maleic acid- modified rosin ester resin is preferably a reaction product of four components, namely, (a) a polyol, (b) a monobasic aliphatic carboxylic acid, (c) a rosin or a modified rosin, and (d) a polycarboxylic acid and/or an anhydride thereof. The polyol is preferably a thiol, and examples thereof include trimethylolethane, trimethylolpropane, glycerol, and hexanetriol. The monobasic aliphatic carboxylic acid has preferably from about 8 to about 20 carbon atoms, and examples thereof include stearic acid, lauric acid, palmitic acid, oleic acid, and refined tall oil fatty acid. The rosin and modified rosin are preferably selected from the group consisting of tall oil rosin, wood rosin, hydrogenated rosin, and dehydrogenated rosin. The polycarboxylic acid or anhydride thereof may be aliphatic or aromatic, and examples thereof include phthalic anhydride, trimellitic anhydride, tetrahydrophthalic anhydride, maleic anhydride, isophthalic acid, fumaric acid, and a mixture thereof.

The phenolic or maleic acid-modified rosin ester resin can be produced through a two-step process, and in the first step, the polyol, the monobasic aliphatic carboxylic acid, and the rosin or modified rosin are preferably reacted at a temperature of from about 250°C to about 290°C, and more preferably from about 260°C to about 280°C, to give an acid number of from about I to about 10. In the second step, the polycarboxylic acid or anhydride thereof is added, and the reaction is preferably continued at a temperature of from about 150°C to about 220°C, and more preferably from about 170°C to about 200°C, to give an acid number of, preferably, from about 20 to about 90, and more preferably from about 20 to about 50.
As a result, all of the monobasic aliphatic carboxylic acid groups and most of the rosin carboxylic acid groups are reacted at about 250°C to about 290°C, and the aromatic carboxylic acid, as pendant groups, is added at about 150°C to about 220°C.

The polymer obtained by grafting the polyepoxide on the ink resin becomes oil insoluble, which enhances squalene (skin oil) resistance, facilitates solvent release for improved heatset drying. Since the crosslinked resin has little solubility, the resin is maintained in the solution by adding an aliphatic alcohol having at least 12 carbon atoms, more preferably from 12 to 24 carbon atoms, and even more preferably 12 or 13 carbon atoms, for example, NEODOL 23 (trade name, manufactured by Shell Oil Co.).

In order to achieve ink roller stability necessary for high speed lithographic web printing, it is preferable to include a high boiling point petroleum distillate varnish solvent such as MAGIE 470 or MAGIE 500 (all trade names, manufactured by Magie Brothers Oil Company, 9101 Fullerton Ave., Franklin Park I11; hydrocarbon solvent). This aliphatic alcohol is used for dissolving the resin in the solvent. When some of the alcohol is evaporated off during adsorption to paper or during the heat drying process, the balance of solubility is affected, the resin precipitates out of the solution, and ink film is in a state of being dry even touched. The more the amount of alcohol evaporates off, the faster the ink dries. The appropriate amount of alcohol is such an amount that enables the ink to transfer through the printing roller of the press and to print the paper without drying during the printing process.

The infrared absorbent represented by Formula (1a) or (1b) is preferably incorporated in an amount of from about 0.01 % by mass to about 5.0% by mass, and more preferably from about 0.1% by mass to about 3.0% by mass, based on the total mass of the ink composition. The infrared absorbent included in this amount may be detected, after printing to a substrate, only when the substrate is viewed under proper illumination by an infrared ray detector.

In a case in which the ink further contains a colored colorant, it is possible to visually detect the printed pattern, however the printed substrate is distinguishable from a substrate printed with an ink that does not contain an infrared absorbent, in a similar manner. This colored colorant may be any of various conventionally known organic or inorganic pigments, and examples thereof include molybdate orange, titanium white, phthalocyanine blue, and carbon black. The content of the colored colorant is preferably from about 5% by mass to about 30% by mass, based on the total mass of the ink.

A modifier, for example, a plasticizer; a wetting agent for the colorant; a leveling agent, for example, lanoline, a paraffin wax, or a natural wax; or a slipping agent, for example, a low molecular weight polyethylene or a microcrystalline petroleum wax, can also be incorporated in the ink. Such a modifier is preferably used in an amount of about 3% by mass or less, and more preferably about 1% by mass, based on the total mass of the ink. The other components can be also used conventionally in inks or coatings to modify adhesion or toughness, and other basic properties can also be used.

The lithographic printing ink can be produced by any method such as a mixing and filtration process, for example, using a three-roll mill, in accordance with a known dispersion method. The ink can be applied to a substrate, preferably paper, by any known and conventional method.

### (5) Inkjet Printing (IJP) Ink

The ink composition for inkjet printing including the coloring composition of the present invention preferably contains at least one of an aromatic sulfonamide or hydroxybenzoic acid ester dissolved in an organic solvent.

The aromatic sulfonamide is preferably a toluene sulfonamide which is substituted as desired, for example, p-toluenesulfonamide, N-ethyl-p-toluenesulfonamide, N-butyl-p-toluenesulfonamide, or N-cyclohexyl-p-toluenesulfonamide. The aromatic sulfonamide is preferably incorporated in the organic solvent-based IJP ink in an amount of from 0.1 % by mass to 40% by mass.

The hydroxybenzoic acid ester is preferably an alkyl ester, particularly preferably an alkylester having from 6 to 12 carbon atoms, for example, 2-ethylhexyl p-hydroxybenzoate or n-nonyl p-hydroxybenzoate. The hydroxybenzoic acid ester is preferably incorporated in the organic solvent-based IJP ink in an amount of from 0.1% by mass to 40% by mass.

Since the aromatic sulfonamides and hydroxybenzoic acid esters have high polarity, they effectively prevent crystallization of dyes.
The infrared absorbent represented by Formula (1a) or (1b) of the present invention is preferably incorporated in the ink in an amount of from about 0.01 % by mass to about 5.0% by mass, and more preferably from about 0.1% by mass to 3.0% by mass, based on the total mass of the ink, and when the ink is applied to the substrate, the ink is detected only by using an infrared ray detector, and thus, an invisible infrared absorbing ink may be provided.

In a case in which the ink further contains a colored colorant, it is possible to visually detect the printed pattern, however the printed substrate is distinguishable from a substrate printed with an ink that does not contain an infrared absorbent, in a similar manner. The colored colorant may be any dye which is soluble in the organic solvent that is incorporated in the ink composition, or is soluble in the above aromatic sulfonamide or hydroxybenzoic acid ester. Generally, useful dyes include an azo dye, a metal complex salt dye, a naphthol dye, an anthraquinone dye, an indigo dye, a carbonium dye, a quinoimine dye, a cyanine dye, a quinoline dye, a nitro dye, a nitroso dye, a benzoquinone dye, a naphthoquinone dye, a naphthalimide dye, a perinone dye, and a phthalocyanine dye. These dyes can be used alone, or may be used in combination. The dye is preferably incorporated in the ink composition in an amount of from 0.1% by mass to 10% by mass, and more preferably from 0.5% by mass to 5% by mass, based on the total mass of the ink.

With regard to the organic solvent to be used in the IJP ink according to the present invention, although it depends on the dye or the mixture of dyes, since most dyes have polarity, a highly polar solvent functions as a good solvent, and a less polar solvent functions as a poor solvent. Therefore, a highly polar solvent that has a high ability to dissolve dyes is preferably used in the production of the IJK ink. However, a less polar solvent can also be used, when the solvent is mixed with the aromatic sulfonamide or hydroxybenzoic acid ester, or when the solvent is used in combination with a higher polar solvent. Specific examples of the organic solvent which can be used in the IJP inks include aliphatic hydrocarbons; naphthenic hydrocarbons; aromatic hydrocarbons, for example, mono- or di-substituted alkylnaphthalenes, biphenyls, and alkyl derivatives of xylylethane or phenetylcumene; glycols; mono- or di-alkyl ethers of glycols and esters of glycols; fatty acids and esters thereof; and nitrogen-containing compounds, for example, amide or pyrrolidone compounds. However, the organic solvent which can be used in the production of the IJP inks is not limited to these specific examples.

The higher the boiling point is, the more advantageous the solvent is in view of reduced amount of evaporation and low drying speed. However, solvents having a higher boiling point have a tendency of producing viscous inks which are difficult to be ejected smoothly. On the other hand, inks obtained by using a solvent having a lower boiling point may dry so quickly that it may dry at the nozzle orifice. Accordingly, a suitable solvent having a desired viscosity and boiling point is selected in consideration of the means of prevention of ink drying, adopted by the print head.

### EXAMPLES

The present invention will be specifically illustrated by the following Examples, but it should be construed that the present invention is not limited to these Examples.
In the description of the Examples, all the parts and proportions are based on "mass", unless stated otherwise.

### Example 1

First, a synthesis example of the infrared absorbing material represented by Formula (1a) or (1b) is described.
The synthesis route is represented by the following formula. Z1-B is a compound that corresponds to Formula (2), Z1-A is an infrared absorbing material that corresponds to Formula (1b), and the exemplary compound (1) is an infrared absorbing material that corresponds to Formula (1a).

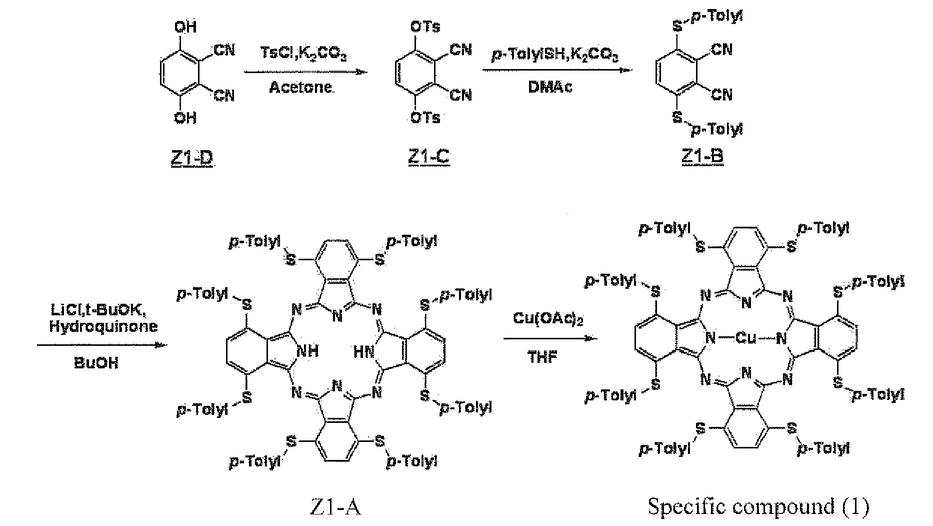

### 1) Synthesis of Z1-B

100 g of 2,3-dicyano-1,4-dihydroquinone (Z1-D), 259 g of potassium carbonate, and 900 mL of acetone were placed in a 3L three-necked flask, and 262 g of p-toluenesulfonyl chloride were dividingly added thereto at an inner temperature of 20°C or lower, and then the resulting mixture was stirred for 2 hours under reflux. Then, after cooling the inner temperature to 50°C, 1000 mL of water were added thereto dropwise, and the resulting liquid was cooled to 10°C over 2 hours. The obtained slurry was filtrated and washed with 300 mL of methanol and 300 mL of water, to obtain 214 g of compound (Z1-C) (yield 73%). Subsequently, 50 g of 4-methylthiophenol, 55.8 g of potassium carbonate, and 590 mL of DMAc were placed in a 2L three-necked flask, and 90 g of the exemplary compound (Z1-C) were dividingly added thereto at an inner temperature of 30°C or lower, and then the resulting mixture was stirred for 2 hours. Then, 1200 mL of water were added thereto dropwise over 10 minutes, the resulting liquid was stirred under room temperature for one hour, and then the obtained slurry was filtrated and washed with 4 L of water, to obtain 46.6 g of compound (Z1-B) (yield 65%).

### 2) Synthesis of Infrared Absorbing Material: Exemplary Compound (1)

30 g of the compound (Z1-B), 16.4 g of lithium chloride, 21.7 g of t-butoxypotassium, and 300 mL of butanol were placed in a 1.00 mL three-necked flask, and heated at 100°C for 6 hours. Then, 1.3 g of hydroquinone were added thereto, and the mixture was stirred for one hour and then cooled to 50°C, and then, 210 mL of water and 105 mL of acetic acid were added thereto. The obtained slurry was filtrated and washed with 200 mL of water and 300 mL of methanol, to obtain 30 g of compound (Z1 -A) (yield 64.6%). The obtained compound was measured by MS (mass spectrum), and a peak that agreed with the molecular weight was obtained.
15 g of the exemplary compound (Z1-A) were dissolved in 1 L of THF, then 3.65 g (2.0 equivalents) of copper acetate were added thereto, and the mixture was stirred at 30°C for 4 hours. After cooling the reaction liquid, water was added thereto, and the resulting slurry was filtrated, washed with 100 mL of methanol, and dried, to obtain 14.7 g of exemplary compound (1) (yield 94%).

### <Measurement of Chlorine Ion Content>

The powder of the compound (1) obtained as described above was let be Sample 1. Further, powder of the compound (1), which was obtained by the same method except for changing the scale in the process of synthesizing the exemplary compound (1) from the compound (Z1-B), was let be Sample 2 to 5.
Powder of the compound (1) synthesized in accordance with the method described in JP-A No. 60-209583, which was used for comparison, was let be Comparative Sample A. With regard to Samples 1 to 5, and Comparative Sample A, the content of chlorine was measured by combustion ion chromatography, and the results are shown in the following Table 1. Samples 1 to 5, which were synthesized by the synthesis method of the present invention, showed a low chlorine ion content of 0.01 % by mass or lower, whereas Comparative Sample A showed an extremely high chlorine content as high as 0.578% by mass.

**Table 1**

| Sample No. | Scale of final process (Amount of obtained compound (1)) | Cl content (% by mass) | Note |
|---|---|---|---|
| 1 | 14.7g | 0.024 | Present invention |
| 2 | 19.0g | 0.021 | Present invention |
| 3 | 194g | 0.066 | Present invention |
| 4 | 296g | 0.053 | Present invention |
| 5 | 5.4kg | 0.059 | Present invention |
| Comparative Sample A | 15.1g | 0.578 | Comparative |

### Example 2

### 1) Synthesis of Exemplary Compound (2)

Synthesis of exemplary compound (2) was conducted in a manner similar to that in Example 1, except that 4-(t-butyl)thiophenol was used instead of using 4-methylthiophenol.

### 2) Synthesis of Exemplary Compound (11)

Synthesis of exemplary compound (11) was conducted in a manner similar to that in Example 1, except that zinc acetate was used instead of using copper acetate.

### <Measurement of Chlorine Ion Content>

The powder of the exemplary compound (2) obtained as described above was let be Sample 6. Further, the powder of the exemplary compound (11) was let be Sample 7. With regard to Sample 6, Sample 7, and Comparative Sample A in Example 1, the content of chlorine was measured by combustion ion chromatography, and the results are shown in the following Table 2. Samples 6 and 7, which were synthesized by the synthesis method of the present invention, showed a lower chlorine ion content of 0.01% by mass or lower, as compared with Comparative Sample A.

**Table 2**

| Sample No. | Scale of final process (Amount of obtained specific compound) | Cl content (% by mass) | Note |
|---|---|---|---|
| 6 | 13.1g | 0.028 | Present invention |
| 7 | 15.0g | 0.025 | Present invention |
| Comparative Sample A | 15.1g | 0.578 | Comparative |

### Example 3

Examples of a pigment dispersed aqueous inkjet ink including the coloring composition of the present invention are described.

### 1) Preparation of Pigment Dispersed Aqueous Inkjet Ink Composition

As the coloring composition, a pigment dispersed aqueous inkjet ink composition was prepared by using the powder of the infrared absorbing material synthesized in Example 1.

The mixture with the composition ratios shown below was dispersed using a sand mill (manufactured by Yasukawa Seisakusho Co., Ltd.) with glass beads (diameter 1.7 mm) in a total weight of 1.5 times the amount of this mixture. Fine grinding was carried out for 2 hours.

**Table 3**

| Material | Added amount (% by mass) |
|---|---|
| Symuler Brilliant Carmine (trade name, manufactured by DIC Co.; C. I. Pigment Red 57:1) | 2.0 |
| Sample 1 to 7 or Samples A | 2.0 |
| N-polyaspartyl -poly(2-vinylpyridine)-ω-carboxamide | 6.0 |
| Glycerol | 13.0 |
| Diethylene glycol | 9.0 |
| Ethanol | 3.0 |
| Ion exchanged water | 63.0 |

After the completion of the dispersion, the glass beads were removed by filtration using a rough stainless steal mesh, and non-dispersed coarse particles were removed by filtration using a 3 µm membrane filter, to obtain an inkjet ink.

### 2) Performance Evaluation

The ink composition thus obtained was charged in a light magenta cartridge of INKJET PRINTER PM-950C (trade name), manufactured by EPSON, and a monochromatic image of magenta was printed. The image was printed on an image receiving sheet, INKJET PAPER PHOTO GLOSS PAPER "KASSAI" (trade name), manufactured by Fujifilm Co., Ltd., and evaluation of image fastness under a high humidity condition was performed.

### (Evaluation of Image Bleeding)

Image bleeding under a high humidity condition was evaluated. Four magenta square patterns each having a size of 3 cm × 3 cm were placed so that each formed a background space having a width of I mm, and a print pattern including the four square patterns, in which the background spaces looked as to form a cross with each of the four arms the same length, was prepared; then, this image sample was stored for 72 hours under the conditions of 25°C and 90% RH; thereafter, bleeding of the magenta dye in the background spaces was observed; and the increase in the magenta density at the background spaces with respect to the magenta density just after printing was evaluated according to the following criteria: Rank A: in the magenta filter of status A, the increase in magenta density is less than 0.01; Rank B: the increase in magenta density is from 0.01 to 0.05; Rank C: the increase in magenta density is more than 0.05; and Rank D: the bleeding state is terrible, and magenta is bleeding to the whole image.
The obtained results are shown in the following table.

**Table 4**

| Ink No. | Sample No. of Compound(1) | Image bleeding | Note |
|---|---|---|---|
| 21 | 1 | A | Present invention |
| 22 | 2 | A | present invention |
| 23 | 3 | A | Present invention |
| 24 | 4 | A | present invention |
| 25 | 5 | A | Present invention |
| 26 | 6 | A | Present invention |
| 27 | 7 | A | Present invention |
| 28 | A | C | Comparative |

From the results shown in Table 4, it was revealed that the systems using the ink composition of the present invention exhibited extremely small degree of image bleeding and showed excellent performance, but the comparative ink composition exhibited image bleeding of Rank C.

This test was conducted by lengthening the time for storage to conduct a one week humidity resistance test, and it was found that, in the printed sample including the comparative ink composition, image bleeding was clearly recognized visually, and the level of image bleeding was inferior as compared with the printed sample formed from the ink composition of the present invention.

### (Evaluation of Printing Durability)

Under the same printing conditions as in the above performance evaluation, for 3 months, from Monday to Friday, printing was conducted on 20 sheets per one day, thus performing a test of durability of the ink composition with respect to the inkjet printer.
As a result, all the ink compositions of the present invention could print with no problem even after 3 months had past.
On the other hand, with regard to the ink composition of the comparative example, fading of printing or printing gap had occurred. The cause of this was investigated, and it was found that rust was generated at several parts of the printer and, as a result, it was cleared up that the cause of the fading of printing or the printing gap was the rust.

When the pigment dispersed aqueous inkjet ink composition including the coloring composition of the present invention was used in a thermal inkjet printer, the same effects were obtained.

### Example 4

Examples of a solvent-based inkjet ink including the coloring composition of the present invention are described.

### 1) Preparation of Inkjet Ink Composition

Solvent-based inkjet ink compositions with the following composition ratios were prepared.

**Table 5**

| Material | Added amount (% by mass) |
|---|---|
| Copper phthalocyanine: C.I. Pigment Blue 15:3 | 3.4 |
| Phenethylcumene | 80.0 |
| Sample 1 to 7, or Sample A, or Comparative compound-1 | 0.6 |
| Diethylene glycol hexyl ether | 14.0 |
| N-butyl-p-toluene sulfonamide | 1.0 |

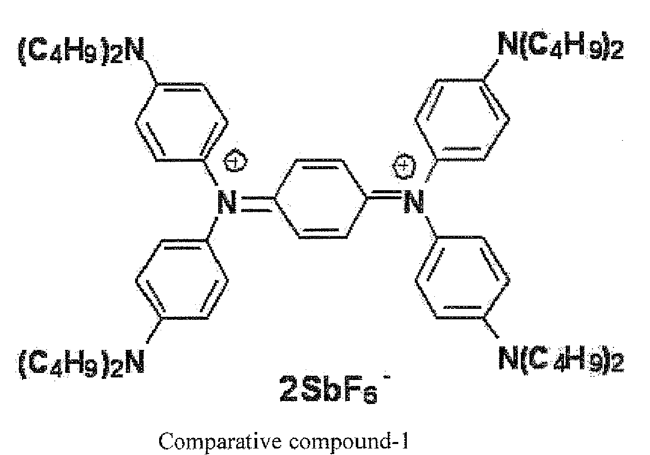

### 2) Performance Evaluation

### (Preparation of Printed Material)

Using each of the obtained inkjet ink compositions, printed materials were prepared by printing on plain paper as a substrate.

### (Evaluation of Light Fastness and Heat Resistance of Printed Material)

Samples were prepared by coating each of the obtained ink compositions on paper, and the following evaluation was performer.

### 1) Evaluation of Light Fastness

The sample was irradiated with a xenon lamp at an illuminance of 95,000 lux for a period described in the table, and the densities of the sample before and after the irradiation in each spectral absorption maximum wavelength were measured, and the rate of residual density was determined, whereby the light fastness of each sample was evaluated.

### 2) Evaluation of Heat Resistance and Wet Heat Resistance

The sample was placed under the condition of 80°C for the evaluation of heat resistance, or under the conditions of 60°C-90% relative humidity (RH) for the evaluation of wet heat resistance, for a period described in the table, and the densities of the sample before and after the placement in each spectral absorption maximum wavelength were measured, and the rate of residual density was determined, whereby the heat resistance and wet heat resistance of each sample were evaluated.

Further, regarding the obtained printed materials, evaluation was performed in a manner similar to that in Example 3. However, image bleeding was evaluated by the measurement of the increase in cyan density of the background.

The obtained results are shown in the following table.

**Table 6**

| Ink No. | Sample No. | Light resistance | Heat resistance | Wet heat resistance | Image bleeding | Note |
|---|---|---|---|---|---|---|
| | | (1 hour) | (50 hours) | (50 hours) | | |
| 31 | 1 | 93 | 82 | 80 | A | Present invention |
| 32 | 2 | 95 | 83 | 81 | A | Present invention |
| 33 | 3 | 92 | 84 | 80 | A | Present invention |
| 34 | 4 | 91 | 81 | 79 | A | Present invention |
| 35 | 5 | 90 | 79 | 78 | A | Present invention |
| 36 | 6 | 73 | 65 | 61 | A | Present invention |
| 37 | 7 | 79 | 68 | 65 | A | Present invention |
| 38 | A | 82 | 71 | 69 | B | Comparative |
| 39 | Comparative 1 compound-1 | 52 | 62 | 44 | C | Comparative |

It was understood that, like the results in Example 3, the printed materials formed from the ink compositions of the present invention exhibited extremely excellent performance in terms of image bleeding, as compared with the printed materials formed from the comparative ink composition. Further, it was revealed that the ink compositions including the coloring compositions of the present invention had unexpectedly high light fastness, heat resistance, and wet heat resistance.

### Example 5

### 1) Preparation of Ink Composition

Lithographic printing ink compositions having a composition described in the following table were prepared.

**Table 7**

| Material | Added amount (% by mass) |
|---|---|
| Bisphenol A epoxide modified phenol resin | 46.0 |
| C.I. Pigment Blue 15:3 | 30.1 |
| Teflon (trade name, manufactured by E. I. Du Pont de Nemours & Co., Inc.) | 7.0 |
| Bodied Tung Oil (commercially available oil as wood oil) | 10.0 |
| Co/Mn drying agent: NAPHTHEX COBALT (Cobalt Naphthenate) (trade name, manufactured by NIHON KAGAKU SANGYO CO., LTD) | 2.0 |
| Sample 1 to 5 or Sample A, or Comparative compound-1 | 0.6 |
| BHT: (antioxidant, dibutyl hydroxytoluene, trade name, manufactured by Tokyo Chemical Industry Co., Ltd.) | 2.0 |
| Hydrocarbon solvent: Magie 470 (trade name, manufactured by Magie Brothers Oil Co.) | 2.3 |

### 2) Performance Evaluation

With regard to the obtained printed materials, evaluation was performed in a manner similar to that in Example 4. The obtained results are shown in Table 8.

As a result, it was understood that the printed materials formed from the ink compositions including the coloring compositions of the present invention exhibited reduced image bleeding and excellent performance, as compared with the printed materials formed from the comparative ink composition. Further, it was revealed that the ink compositions including the coloring compositions of the present invention had unexpectedly high light fastness, heat resistance, and wet heat resistance.

Accordingly, in a case in which the ink composition including the coloring composition of the present invention is used as a security printing ink, the ink may exhibit excellent durability under various storage environments, and its functions may be maintained and utilized stably for a long-term.

**Table 8**

| Ink No. | Sample No. | Light resistance | Heat resistance | Wet heat resistance | Image blur | Note |
|---|---|---|---|---|---|---|
| | | (1 hour) | (50 hours) | (50 hours) | | |
| 41 | 1 | 93 | 89 | 79 | A | Present invention |
| 42 | 2 | 90 | 90 | 78 | A | Present invention |
| 43 | 3 | 90 | 89 | 80 | A | Present invention |
| 44 | 4 | 88 | 88 | 77 | A | Present invention |
| 45 | 5 | 89 | 87 | 76 | A | Present invention |
| 46 | A | 75 | 66 | 64 | B | Comparative |
| 47 | Comparative compound-1 | 47 | 59 | 42 | C | Comparative |

### Example 6

### 1) Preparation of Ink Composition

Intaglio printing ink compositions having a composition described in the following table were prepared.

**Table 9**

| Material | Added amount (% by mass) |
|---|---|
| Resin: Hardened rosin oil | 50.0 |
| HALS: (antioxidant, trade name, manufactured by Ciba specialty Chemical Co.) | 0.4 |
| Toluene/Xylene/Lactol | 25.0 |
| C.I. Pigment Blue 15:3 | 24.0 |
| Sample 1to 5 or Sample A, or Comparative compound-1 | 0.6 |

### 2) Performance Evaluation

### (Preparation of Printed Material)

Using each of the obtained inkjet ink compositions, printed materials were prepared by printing on plain paper as a substrate.

### (Evaluation of Light Fastness and Heat Resistance of Printed Material)

With regard to the obtained printed materials, evaluation was performed in a manner similar to that in Example 4. The obtained results are shown in Table 10.
As a result, the printed materials formed from the ink compositions including the coloring compositions of the present invention exhibited unexpectedly high light fastness, heat resistance, and wet heat resistance, as compared with the printed materials formed from the comparative ink composition.

**Table 10**

| Ink No. | Sample No. | Light resistance | Heat resistance | Wet heat resistance | Note |
|---|---|---|---|---|---|
| | | (1 hour) | (50 hours) | (50 hours) | |
| 51 | 1 | 90 | 83 | 77 | Present invention |
| 52 | 2 | 90 | 81 | 78 | Present invention |
| 53 | 3 | 91 | 81 | 74 | Present invention |
| 54 | 4 | 87 | 79 | 71 | Present invention |
| 55 | 5 | 84 | 75 | 71 | Present invention |
| 56 | A | 71 | 69 | 59 | Comparative |
| 57 | Comparative compound-1 | 42 | 46 | 39 | Comparative |

### Example 7

### 1) Preparation of Ink

UV curable ink compositions with the composition ratios shown in the following table were prepared.

**Table 11**

| Material | Added amount (% by mass) |
|---|---|
| Isobornyl acrylate | 50.0 |
| Ethoxylated trimethylolpropane triacrylate | 27.0 |
| Propoxylated neopentyl glycol diacrylate | 16.0 |
| C. I. Pigment Blue 15:3 | 2.0 |
| Samples 1 to 5 or Sample A, or Comparative compound-1 | 0.5 |
| Polymer dispersant: partial alkyl ester of poly acrylic acid | 0.5 |
| 2-Ethylanthraquinone (photo initiator) | 3.7 |
| Fluorocarbon surfactant: EFTOP EF-351 (trade name, Hydrocarbon acrylate-perfluorocarbon acrylate polymer) | 0.3 |

### 2) Performance Evaluation

### (Preparation of Printed Material)

Using each of the obtained UV curable ink compositions, a mark was applied to plain paper as a substrate.

### (Evaluation of Light Fastness and Heat Resistance of Printed Material)

With regard to the obtained printed materials, evaluation was performed in a manner similar to that in Example 4. The obtained results are shown in Table 12.
As a result, the printed materials formed from the UV curable ink compositions according to the present invention exhibited unexpectedly high light fastness, heat resistance, and wet heat resistance, as compared with the printed materials formed from the comparative UV curable ink composition.

**Table 12**

| Ink No. | Sample No. | Light resistance | Heat resistance | Wet heat resistance | Note |
|---|---|---|---|---|---|
| | | (1 hour) | (50 hours) | (50 hours) | |
| 61 | 1 | 94 | 88 | 79 | Present invention |
| 62 | 2 | 96 | 89 | 78 | Present invention |
| 63 | 3 | 95 | 90 | 78 | Present invention |
| 64 | 4 | 94 | 87 | 75 | Present invention |
| 65 | 5 | 93 | 85 | 72 | Present invention |
| 66 | A | 79 | 77 | 68 | Comparative |
| 67 | Comparative compound-1 | 70 | 67 | 61 | Comparative |

### INDUSTRIAL APPLICABILITY

The infrared absorbing material and the coloring composition including the same, which are provided by the present invention, may be used in images having security properties or in information recording, and the information detecting method using these can be utilized for the use of checking means such as prevention of falsification, or reconstruction, or discrimination of, for example, cards such as prepaid cards, credit cards, bank cards, identification cards, licenses, tickets, entrance tickets, membership cards, or securities, marketable securities, paper moneys, tickets, documents, or the like.

## Claims

1. An infrared absorbing material, that is represented by the following Formulae (1a) or (1b) and comprises an acidic ion in a content of 0.1% by mass or less with respect to a total mass of the infrared absorbing material: 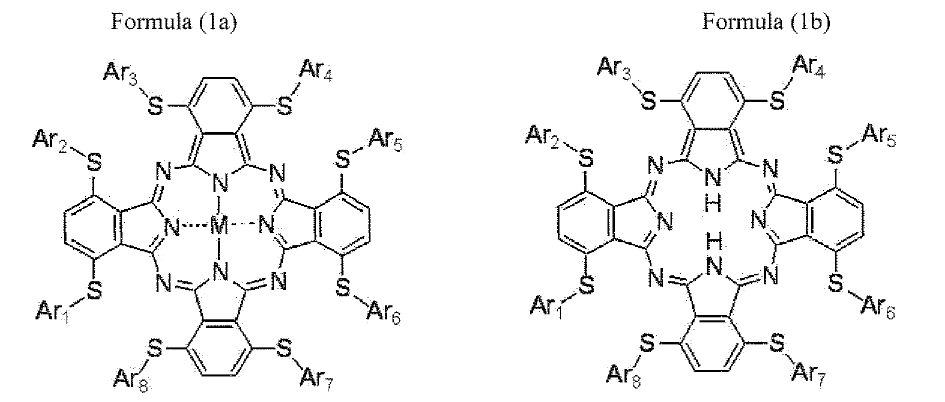 wherein, in Formulae (1a), M represents a metal atom or a substituted metal atom and, in Formulae (1a) and (1b), each of Ar₁, Ar₂, Ar₃, Ar₄, Ar₅, Ar₆, Ar₇ and Ar₈ independently represents a substituted or unsubstituted aryl group.

2. A colored composition comprising at least one of the infrared absorbing material according to claim 1.

3. A method of synthesizing an infrared absorbing material represented by the following Formulae (1a) or (1b), wherein a compound represented by the following Formula (2) is used as a raw material: 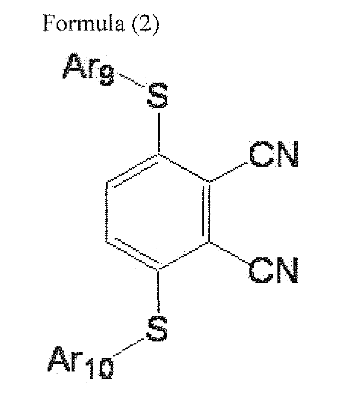 wherein, in Formula (2), each of Ar₉ and Ar₁₀ independently represents a substituted or unsubstituted aryl group: 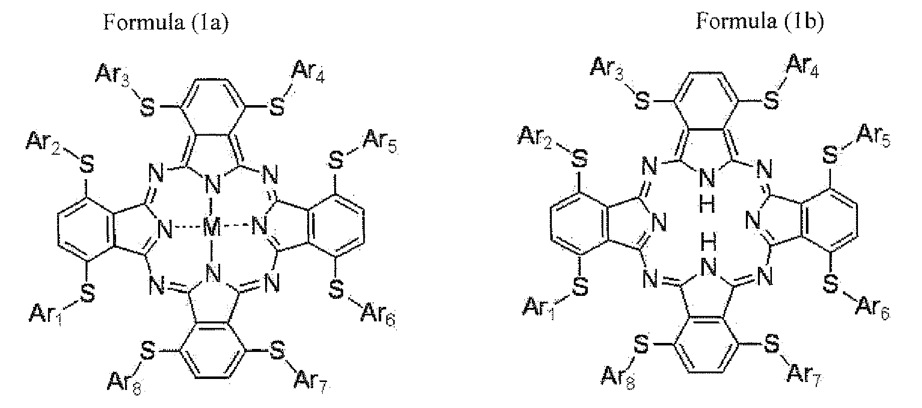 wherein, in Formulae (1a), M represents a metal atom or a substituted metal atom and, in Formulate (1a) and (1b), each of Ar₁, Ar₂, Ar₃. Ar₄, Ar₅, Ar₆, Ar₇ and Ar₈ independently represents a substituted or unsubstituted aryl group.

4. The method of synthesizing an infrared absorbing material according to claim 3, the method comprising a reaction process including t-BuOM³ and a lithium halide in organic solvent, wherein M³ represents an alkali metal.

5. The method of synthesizing an infrared absorbing material according to claim 4, wherein the reaction process including t-BuOM³ and a lithium halide further includes a hydroquinone.

6. An infrared absorbing material synthesized by the method of synthesizing an infrared absorbing material according to any one of claims 3 to 5.

7. A colored composition comprising at least one of the infrared absorbing material according to claim 6.

8. The colored composition according to claim 2 or claim 7, wherein M in Formula (1a) is a copper atom.

9. The colored composition according to claim 2 or claim 7, further comprising a colorant and a binder.

10. An ink comprising the colored composition according to any one of claims 2 and 7 to 9.

11. A toner comprising the colored composition according to any one of claims 2 and 7 to 9.

12. A printed matter that is printed using the colored composition according to any one of claims 2 and 7 to 9.

13. An image recording method comprising using the colored composition according to any one of claims 2 and 7 to 9.

14. An image detecting method for detecting image information of an image which is recorded by the image recording method according to claim 13, the image detecting method comprising using an infrared detector.
